# EUROPEAN PATENT SPECIFICATION

(11) **EP 4 261 646 B1**
(45) Date of publication and mention of the grant of the patent: **10.09.2025**
(21) Application number: 22168315.4
(22) Date of filing: 14.04.2022
(51) Int. Cl.: G05D 1/00, G01S 17/89

(54) **SCANNER EMULATION FOR MINING VEHICLE**
SCANNER-EMULATION FÜR EIN BERGBAUFAHRZEUG
ÉMULATION DE SCANNER POUR VÉHICULE D'EXPLOITATION MINIÈRE

(43) Date of publication of application: 18.10.2023
(73) Proprietor: Sandvik Mining and Construction Oy, 33330 Tampere (FI)
(72) Inventor: LIIKANEN, Henri, 33311 Tampere (FI)
(74) Representative: Sandvik

(56) References cited:
- EP-A1- 3 839 203
- US-A1- 2007 027 612
- US-A1- 2016 333 690

## Description

### FIELD

The present invention relates to scanner emulation for mining vehicles, and further to arranging emulation of two-dimensional scanner based on three-dimensional scanner data, to enable positioning of mining vehicles which may be autonomously operating at a worksite.

### BACKGROUND

Mining or construction excavation worksites, such as underground hard rock or soft rock mines, may comprise areas for automated operation of mining vehicles, such as load and/or haul machines and drilling rigs. Such mining vehicles may comprise an unmanned vehicle, for example, remotely controlled from a control room, or a manned vehicle, such as a vehicle operated by an operator in a cabin of the vehicle. Mining vehicles may be configured to perform at least some of tasks autonomously. An automated mining vehicle set in an automatic mode may be configured to drive a route from a start point to a destination point autonomously.

Mining operations data, such as vehicle operations status data, for example speed, position at the worksite, motor parameters, load, and other performance data, may be transferred to a data processing system, which may be configured to provide a mine operations control system. The system may comprise a user interface for a user (may also be referred to as operator) of the system. Positions of vehicles performing their drive orders may be indicated for the operator monitoring the vehicles and manually controlling a vehicle when needed. Worksites may be very large and complex with a fleet or multiple fleets of simultaneously operating vehicles.

US2016333690 discloses a mine control system for monitoring mine operations that includes a plurality of mine vehicles provided with on-board monitoring means. Monitoring data is transmitted from the mine vehicle to the mine control system, which is provided with a mine plan. The mine control unit is configured to compare the received monitoring data with the mine plan and to determine the current state of the mine relative to the mine plan on the basis of the monitoring data.

Mining vehicles using different mapping or positioning systems may need to be operated and positioned at the same worksite. For example, some mining vehicles may apply a two-dimensional (2D) based map and environment scanning based positioning system, whereas some other mining vehicles may apply a three-dimensional (3D) based map and positioning system based on environment scanning.

### SUMMARY

The invention is defined by the features of the independent claims. Some specific embodiments are defined in the dependent claims.

According to a first aspect, there is provided an apparatus, configured to or comprising means for: receiving three-dimensional, 3D, scanner data generated by a scanner of a mining vehicle operating at a worksite, receiving information of orientation of the scanner in relation to a horizontal plane of the mining vehicle, defining a two-dimensional, 2D, plane at a vertical direction level in relation to a vertical direction level of the scanner and a reference point thereof, the 2D plane being aligned parallel with the horizontal plane of the mining vehicle on the basis of the information of the orientation of the scanner, defining a set of measurement areas having a distance in a vertical direction from the 2D plane, selecting a measurement within each measurement area of the set on the basis of the 3D scanner data thereby excluding vertical position information of the 3D scanner data, and providing emulated 2D scanner data comprising the selected measurements to position, on the basis of 2D reference data and the emulated 2D scanner data, the mining vehicle or another mining vehicle. The means may comprise one or more processors and memory comprising instructions, when executed by the one or more processors, cause the apparatus to perform the method.

According to a second aspect, there is provided a method comprising: receiving 3D scanner data generated by a scanner of a mining vehicle operating at a worksite, receiving information of orientation of the scanner in relation to a horizontal plane of the mining vehicle, defining a 2D plane at a vertical direction level in relation to a vertical direction level of the scanner and a reference point thereof, the 2D plane being aligned parallel with the horizontal plane of the mining vehicle on the basis of the information of the orientation of the scanner, defining a set of measurement areas having a distance in a vertical direction from the 2D plane, selecting a measurement within each measurement area of the set on the basis of the 3D scanner data thereby excluding vertical position information of the 3D scanner data, and providing emulated 2D scanner data comprising the selected measurements to position, on the basis of 2D reference data and the emulated 2D scanner data, the mining vehicle or another mining vehicle.

Embodiments of the method include various embodiments of the apparatus of the first aspect, some of which are illustrated in dependent apparatus claims.

According to a third aspect, there is provided a computer program, a computer program product or computer-readable medium comprising computer program code for, when executed in a data processing apparatus, to cause the apparatus to perform the method or an embodiment thereof.

### BRIEF DESCRIPTION OF THE DRAWINGS

FIGURE 1 illustrates an example of an example of a mining vehicle;
FIGURE 2 illustrates a method according to at least some embodiments;
FIGURES 3a, 3b, and 3c illustrate adapting scanner data processing according to at least some embodiments;
FIGURE 4a illustrates an example of 3D scan shape and a set of measurement areas provided according to at least some embodiments;
FIGURE 4b illustrates a top view example of a set of measurement areas;
FIGURE 4c illustrates a measurement selection within a measurement area;
FIGURE 5 illustrates a method according to at least some embodiments; and
FIGURE 6 illustrates an example apparatus capable of supporting at least some embodiments of the present invention.

### EMBODIMENTS

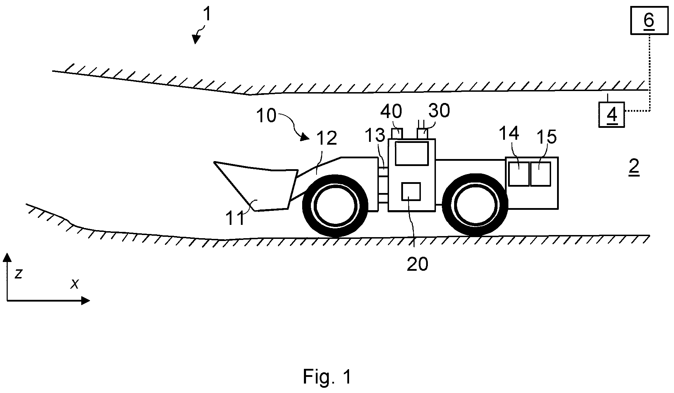

Fig. 1 illustrates a simplified example of a portion of mining worksite 1, in the present example comprising an underground (tunnel) portion or tunnel 2. The mining worksite may comprise an ore mine or a construction site, such as a railway or road tunnel site. However, it will be appreciated that a worksite may comprise only on-surface areas, only underground areas, or both surface and underground areas. The term mining vehicle herein refers generally to mobile work machines suitable to be used in the operation of different kinds of underground or surface mining or construction excavation worksites, such as lorries, dozers, dumpers, vans, mobile rock drilling or milling rigs, mobile reinforcement machines, and bucket loaders or other kind of mobile work machines which may be used in different kinds of excavation worksites.

The vehicle 10 is in the present example a loader or a load and haul (LHD) vehicle comprising a bucket 11 connected to a boom 12. The vehicle 10 may be, for example, an articulated vehicle comprising two sections connected by a joint 13. However, it will be appreciated that application of the presently disclosed features are not limited to any particular type of vehicle which may be used at excavation worksites. Some other examples of such a vehicle include inspection vehicles, autonomous inspection vehicles (AIVs), lorries, dumpers, vans, mobile rock drilling or milling rigs, or mobile reinforcement machines.

In the example of Figure 1, the vehicle 10 comprises a system 14 of pumps for generating hydraulic pressure for operating various parts of the machine, such as lifting the boom 12, turning the bucket 11, etc. The vehicle 10 may comprise one or more other sources of energy, such as an accumulator, a hydrogen container, a fuel tank, etc. The vehicle 10 may comprise a motor 15, such as a combustion engine or an electric motor. Power from the motor 15 may be provided by a crank shaft to front and/or rear wheels either directly or via a gear box. The drivetrain of the vehicle 10 may comprise, for example, motor 15, the crank shaft, and/or a transmission.

The vehicle 10 comprises at least one control unit 20 configured to control at least some functions and/or actuators of the vehicle. The control unit 20 may comprise one or more computing units/processors executing computer program code stored in memory. The control unit 20 may be connected to one or more other control units of a control system of the vehicle, for example, by a controller area network (CAN) bus. The control unit 20 may comprise or be connected to a user interface (UI) with a display device as well as an operator input interface. Such interfaces are usable for receiving operator commands and information to the control unit. It is to be appreciated that the control unit 20 may be configured to perform at least some of the below illustrated features, or a plurality of control units or controllers may be applied to perform these features. It is to be appreciated that at least some of the control functionality may be implemented even outside the vehicle, for example, at a worksite management system.

The vehicle 10 may comprise a wireless communication device 30, by which the control unit 20 and/or another unit of control system of the vehicle 10 may be configured to establish a data connection. The data connection comprises at least one of: data reception, and/or data transmission. The data connection may be formed between the control system of the vehicle and at least one control device of a (mining operations) control system 6 external to the vehicle. The data connection may utilize a wireless connection provided by a base station or access node 4. The communication device 30 may thus be operatively connected to a communications system of the worksite, such as a wireless access system comprising a wireless local area network (WLAN) and/or a cellular communications network such as a 4G, 5G or some other generation cellular network.

The control system 6 may comprise or be connected to further network(s) and/or data processing system(s), such as a worksite management system, a cloud service, a data analytics system, an intermediate communications network, such as the internet, etc. The control system 6 may comprise or be connected to further device(s) or control unit(s), such as a handheld user unit, a vehicle unit, a worksite management device/system, a remote control and/or monitoring device, data analytics device, sensor system/device, etc.

The vehicle 10 may be unmanned. The vehicle may comprise a user interface to allow a user to control any of the functions of the vehicle, for example, steering. The vehicle may be configured to be remote-controlled via an operator input interface in addition to the user interface or as an alternative to the user interface. Examples of remote control include: control by an operator in the tunnel, or control by an apparatus within a control room at the worksite, or even control by an apparatus from a long distance away from the worksite via communications network(s). The vehicle 10 may be an automated vehicle, which in an autonomous operating or driving mode may operate/drive independently without requiring continuous user control. Such an automated vehicle may be taken under external control, for example, during states of emergencies. When the vehicle is in a manual driving mode, an operator drives the vehicle manually, by remote control or locally at the vehicle by operator controls. The operator may set the vehicle into a (default) automatic driving mode in which the vehicle is configured to automatically drive a specified route, for example, between a loading point and a dump shaft.

Apparatuses of the worksite, such as the control device(s) of the control system 6 and the mining vehicle 10, may be configured to store and use at least one worksite model representing current state and/or target state of the worksite environment. The worksite model may be an environment model or a map. The worksite model may be a 2D model or a 3D model indicative of surface profiles and obstacles at the worksite, at an area operated by mining vehicles, for example. In the case of an underground worksite, the worksite model may be a tunnel model indicative of tunnel profiles.

The control system 6 and/or mining vehicle(s) 10 at the worksite may be configured to store a 3D (tunnel) model of the underground worksite, illustrating floors, walls, and ceilings of the tunnel network 2. In some embodiments, the mining vehicle 10 and/or the control system 6 is configured to apply a 2D worksite model, for monitoring position of the mining vehicle based on environment scanning by a 2D scanner comprised by the mining vehicle.

The worksite model may comprise point cloud data generated on the basis of scanning. A point cloud comprises a collection of data points defined by a given coordinates system. In a 3D coordinate system, for example, a point cloud may define the profile of the underground tunnel network 2. The 3D model may comprise or be formed based on point cloud data generated on the basis of scanning the tunnel system. The control device may be configured to generate and/or update the worksite model, for example, based on point cloud data received from mining vehicles or other apparatuses comprising an environment scanning device. For navigation purposes, it is possible to generate a 3D model by combining depth measurements from a high-density scanner, such as LIDAR.

The worksite model may be stored in a database accessible by one or more modules of a computing apparatus, such as a tunnel model processing module, a user interface or visualizer module, a route planning module, and/or a positioning service module. In other embodiments, the worksite model may be a design model or may be generated on the basis of a design model. For example, the design model may be a computer-aided design (CAD) model, created by a mine designing software. In another example, the design model is a 3D model created on the basis of tunnel lines and profiles designed in a drill and blast design software, such as iSURE^{®}. Apparatuses performing worksite model processing, such as the control device(s) of the control system 6 and the mining vehicle(s), may be configured to process a measured model and/or a planned model of the worksite.

A driving plan, a route plan or a drive order, may define a route to be driven by the vehicle 10 and may be used as an input for automatic control of the vehicle. The plan may define a start point, an end point, and a set of route points for the automatic drive. A route point entry may comprise at least 2D coordinates of the route point, but it may also comprise a vertical coordinate or vertical layer indication. Route point entries may also comprise further information, such as speed information or obstacle and/or safety control related information. The plan and included route point positions may be defined on the basis of a teach drive performed by manually driving the vehicle or computationally on the basis of operator input, the worksite model and vehicle dimensions information. The plan may be sent via a wired or wireless connection to, or otherwise loaded to the vehicle, to a memory of the vehicle for access by a control unit of the vehicle.

The mining vehicle 10 may be provided with an obstacle detection function or unit, which may be part of a collision avoidance or prevention system. The obstacle detection function may be configured to perform collision examination based on scanner data received from at least one scanner 40 configured to perform scanning of the environment of the vehicle. For example, one scanner may cover a rear portion of the vehicle and another scanner may cover a front section of the vehicle by directional beams.

The scanner 40 may be a 3D scanner, by which case 3D scanner data, such as point cloud data, is produced. The scanner data may also be referred to as scanning data. The scanner may be a laser scanner or another type of sensor device, such as a 4D or another type of radar, appropriate for determining distances to obstacles for the vehicle. The obstacle detection function may apply one or more obstacle detection or safety areas around the vehicle. For example, obstacles detected within a preconfigured or dynamically adapted distance from the mining vehicle are determined as obstacles causing a control action for the mining vehicle. If an object is detected as an obstacle in the area, the vehicle may be stopped.

The mining vehicle 10 may be configured to, on the basis of processing scanner data from at least one scanner 40 and the worksite model, detect a position and orientation of the vehicle and one or more further elements thereof. For example, the mining vehicle 10 is configured to determine a position of the scanner, or a leading edge of a bucket of the vehicle further based on vehicle element kinematics parameter data. A control unit, such as the control unit 20, in the vehicle may be configured to compare scanned profile data (scanned during operation of the mining vehicle) to reference profile stored in the worksite model.

The control unit may be configured to position the vehicle on the basis of finding a match between the scanned tunnel profile data and the reference tunnel profile. The control unit may be configured to correct positioning of the vehicle by dead-reckoning on the basis of the position determined based on the scanning. The vehicle may comprise a simultaneous localization and mapping (SLAM) unit configured to both position the vehicle and (augment) map the environment on the basis of (2D or 3D) scanning information while the vehicle is driving. The mining vehicle 10 or the control system 6 may be configured to update the worksite model based on the scanning information.

At some worksites, mining vehicles equipped with 3D scanners may need to operate with a positioning system based on a 2D worksite model. For example, a 3D scanner may be included, for improved obstacle detection, at a vehicle configured to position itself and navigate autonomously based on a 2D based system, applying 2D worksite model and route. In another example, a vehicle equipped with a 3D scanner may need to co-operate with other vehicles or systems applying 2D based environment scanning positioning system.

There are now provided improvements for facilitating improved compatibility in a mining automation system. In particular, improvements are provided for a mining vehicle applying 3D scanners to be compatible with systems applying 2D worksite models, to be able to position the mining vehicle based on scanner data by the 3D scanner.

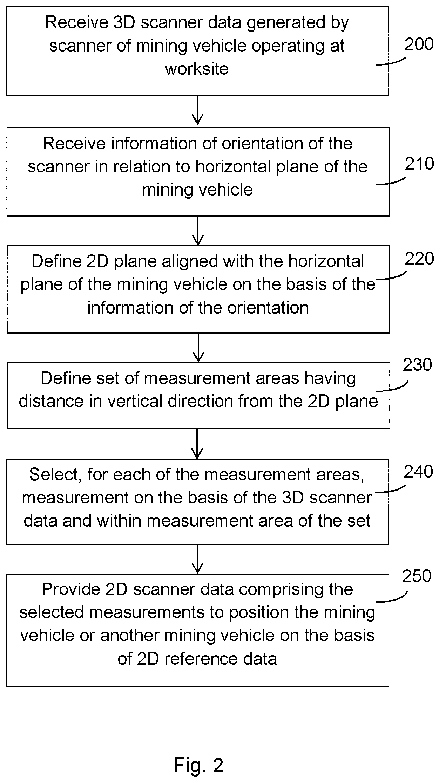

Fig. 2 illustrates a method according to some embodiments. The method may be performed by an apparatus, in some embodiments a control apparatus configured to control environment scanner data adaptation of a mining vehicle. The apparatus may be a scanner emulation apparatus, configured to provide 2D scanner emulation based on 3D scanner data. The method may be performed by a mining vehicle and a controlling apparatus thereof, such as the mining vehicle 10, and by the control unit 20 thereof, respectively. The method may be a computer-implemented method.

The method comprises receiving 200 3D scanner data generated by a scanner of a mining vehicle operating at a worksite. Block 210 comprises receiving information of orientation of the scanner in relation to a horizontal plane of the mining vehicle.

Block 220 comprises defining a 2D plane aligned with the horizontal plane of the mining vehicle on the basis of the received information of the orientation. The 2D plane, aligned with the horizontal plane, may be positioned in vertical direction in block 220 on the basis of the information of the orientation.

Block 230 comprises defining a set of measurement areas having a distance in vertical direction from the 2D plane to gather measurements. The measurement areas may be defined to gather measurements of the 3D scanner data at a desired distance from the 2D plane and a reference point of the scanner, such as an origo. The measurement areas may be aligned with the 2D plane and deviated from the reference point of the scanner on the basis of a vertical deviation parameter.

Block 240 comprises selecting, for each of the measurement areas, a measurement on the basis of the 3D scanner data and within a measurement area of the set. For example, in case of the 3D scanner data being point cloud data, at least one point within a given measurement area is selected.

Block 250 comprises providing 2D scanner data comprising the selected measurements to position the mining vehicle or another mining vehicle on the basis of 2D reference data.

The horizontal plane may refer to a (lateral) plane defined by lateral axes in the vehicle coordinate system. The horizontal plane may refer to plane defined by x axis and y axis in the Cartesian coordinate system. For example, the 2D plane may be defined as parallel with the xy-plane of the vehicle body coordinate frame on a wheel axle.

The 3D scanner data is indicative of at least partial 3D environment profile around the vehicle, within a measurement range of the scanner. The 3D scanner data may refer to data indicative of positions in 3D space, such as 3D point cloud data.

The 2D scanner data may refer to data indicative of positions in 2D space, such as measurement points in the horizontal plane. The 2D scanner data may thus define a 2D profile, which is a resulting environment profile in horizontal plane at the selected vertical level. The 2D scanner data in block 250 may thus comprise information indicative of horizontal 2D position of the points selected in block 240, in some embodiments x and y coordinates of each selected point. Thus, the vertical position information may be excluded or removed between blocks 240 and 250. The 2D scanner data may thus comprise information indicative of measurement distance of the selected points from the scanner origo.

The information of orientation of the scanner may refer generally to orientation of the scanner relative to a reference point or area of the vehicle, and may directly or indirectly enable to define the orientation of the scanner in relation to the horizontal plane. The orientation information may thus indicate the position of a scanner reference point, such as the origo of the scanner, in the machine coordinate system. The 2D plane may be positioned in vertical direction in block 220 on the basis of the information of the orientation. Block 220 enables to bind measurements in a coordinate system in line or aligned with the mining vehicle. The selected measurements can be bind to the same coordinate system as a 2D scanner (being emulated) would apply (or has applied). Regardless of the location of the 3D scanner, appropriate 2D measurement results may be provided as output for a 2D based positioning system, used in many particularly earlier generation machines. Usage of the 3D scanner and the present features enable further freedom of positioning the scanner since the output 2D data from the 3D scanner may be provided in alignment with the horizontal (xy) plane of the mining vehicle.

As will be explained further below, the 2D plane may be positioned at the same vertical direction level as the scanner and the reference point thereof, or deviated from this vertical direction level.

The measurement areas may also be referred to as bins, for example. The 2D scanner data of block 250 may also be referred to as emulated 2D scanner output, for example. Such emulated 2D scanner output may be generated based on the 3D scanner data by a 3D scanner.

The method facilitates to improve co-operation and compatibility with vehicles applying different positioning systems, for example for vehicles of older and newer generations or for vehicles of different manufacturers. For example, a 3D scanner may be retrofitted to a mining vehicle comprising a 2D scanning based navigation system, and the 3D scanner may be used as the environment scanning input for the navigation system. In another example, a newer generation mining vehicle with an on-board 3D scanner may be included as part of a fleet of mining vehicles monitored and/or controlled based on a 2D worksite model.

By applying the presently disclosed adaptation, original 2D based positioning functionality may operate correctly and position the mining vehicle in a 2D worksite model on the basis of the emulated 2D scanner data output.

The apparatus, configured to perform the method of Fig. 2, may be configured to provide an interface adapter application between a 3D scanner or SLAM application and a 2D scanning based navigation system or application. Setting the vertical direction position or height from which the measurements are selected to the 2D output will significantly reduce the 3D scanner installation height requirement and preciseness, since the 2D scan layer is not constrained to be at the center point of the scanner.

There may be further blocks in the method, some example embodiments being illustrated below. For example, there may be a specific block of aligning or levelling the 2D plane with the horizontal plane of the mining vehicle, and another block of positioning the 2D plane in the vertical direction on the basis of the relational information between the scanner and the horizontal plane received in block 210. The planes are aligned so that the 2D plane and the horizontal plane are parallel. Further, it is also to be appreciated that the apparatus may be configured to receive the information of the orientation before receiving the 3D scanner data.

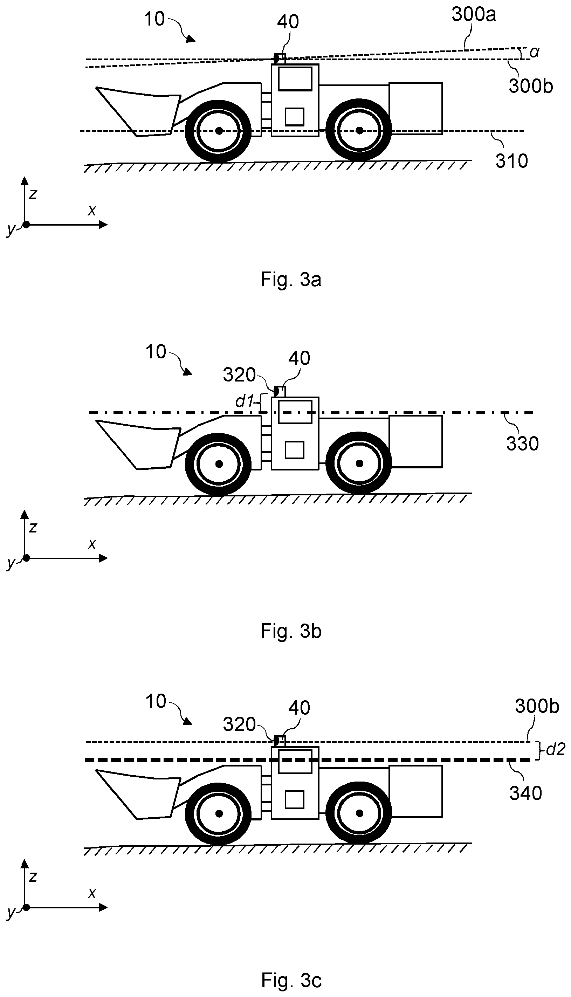

Fig. 3a illustrates an example horizontal plane 310, in the present example parallel to *xy* plane at axis z direction level in a machine body coordinate system. Line 300a illustrates an orientation of the scanner. Line 300b illustrates a 2D plane aligned with the horizontal plane 310, and differing from the scanner orientation line 300a by angle α.

The apparatus may be configured to define a vertical direction position of the 2D plane and/or the measurement areas in relation to a reference point of the scanner 40, such as an origo of the scanner. This may be performed in block 230, or as a further block between blocks 220 and 230 or between blocks 230 and 240.

As illustrated in Fig. 3b, the apparatus may be configured to position the 2D plane, illustrated by line 330, to a predefined distance *d1* from the reference point 320. The distance may be defined by a (2D plane) deviation parameter, facilitating to deviate the 2D plane in *z* direction from the scanner reference point. The parameter may be adaptable, facilitating to change position of the 2D plane to an appropriate vertical level for 2D measurements.

The apparatus may be configured to define the set of measurement areas at the 2D plane, further illustrated by line 330. For example, the measurement areas may be defined, in the vertical direction, to extend on top of the 2D plane, directly below the 2D plane, or across the 2D plane. Thus, if the 2D plane is positioned to the predefined distance *d1* from the reference point in the vertical direction, the set of measurement areas at or around the 2D plane are also deviated from the reference point and may not need to be further deviated. In such a case, the distance of the measurement areas from the 2D plane may refer to (a portion of) the measurement areas extending in vertical direction above and/or below the 2D plane. The amount of extension is dependent on vertical direction size or height of the measurement areas, defining the vertical direction measurement range. The vertical direction size of the measurement area may already provide sufficient deviation from the scanner reference point to output 2D measurements at appropriate vertical level. Thus, in some cases it may not be necessary to separately deviate the predefined distance *d1* from the reference point 320.

In some embodiments, the apparatus is configured to position the 2D plane at such reference point, and deviate the set of measurement areas from the 2D plane.

The apparatus may be configured to deviate the measurement areas and associated vertical level from the 2D plane (and/or the scanner reference point) on the basis of an associated vertical deviation parameter. This parameter may also be referred to as a vertical distance or range parameter. The vertical deviation may be positive or negative, above or below the 2D plane.

Fig. 3c illustrates a set 340 of measurement areas positioned at a distance *d2* from the 2D plane 300b. The apparatus may be configured to generate the measurement areas in a horizontal direction in block 240.

For example, the apparatus may be configured to deviate the set of measurement areas from the scanner reference point (or the 2D plane in case of arrangement like illustrated in Fig. 3c) by 10-80 cm, such as 30 or 60 cm, above or below the scanner reference point on the basis of the vertical deviation parameter. The vertical deviation parameter may be adapted based on information on vertical level applied when generating the 2D reference data. For example, z direction deviation from ground of a 2D scanner applied for generating the 2D reference data may be stored with the 2D reference data and used as an input.

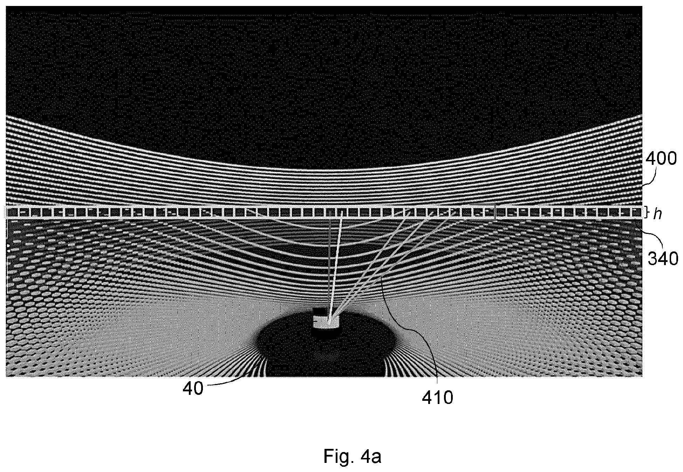

With reference to Fig. 4a, the apparatus may be configured to define a size or height h of measurement areas in the vertical direction. This may be based on a vertical size parameter, which may be adaptable. The apparatus may be configured to deviate the set of measurement areas and the 2D measurement level in the vertical direction from a reference point of the scanner, as already above illustrated. Fig. 4a also illustrates the curved nature of 3D scanner point measurement sets or fans 400, and that measurements 410 may be included in the horizontal plane aligned set of measurement areas. The apparatus may thus be configured to adapt the deviation by modifying the vertical size parameter.

The apparatus may be configured to define a measurement range above and/or below the scanner reference point or the 2D plane on the basis of the vertical size parameter. For example, the measurement range may be within 2-20 cm, such as 5 or 10 cm, above and/or below the scanner reference point on the basis of the vertical size parameter. In a further example embodiment, the measurement range is symmetrically divided on both sides of the 2D plane, whereby the measurement areas or bins may extend by *h*/*2* on both sides of the 2D plane.

The apparatus may be configured to define the measurement areas in the horizontal direction on the basis of (measurement area) horizontal direction parameter information. Positions and size of the measurement areas may thus be defined based on the horizontal direction parameter information. The parameter information may be indicative of coverage area of the measurement areas. The parameter information may be indicative of size or width of the measurement areas (which may be the same for each measurement area) in the horizontal direction. The parameter information may be indicative of an angle of measurement for each measurement area in the horizontal direction. The parameter information may further be indicative of a number of measurements and/or measurement areas required.

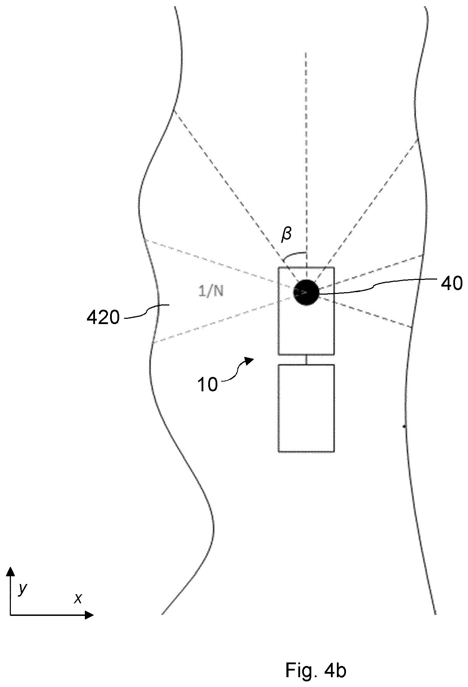

For example, with reference to the simplified example of Fig. 4b, a preconfigured default number *N* of bins 420 (as measurement areas) is defined in block 230. The size of a bin may be defined (and indicated in the horizontal direction parameter information) by an *xy* plane angle *β*. It will be appreciated that the division in Fig. 4b is for clarity purposes substantially simplified and in real implementation there will be substantially more bins with smaller (and equal) *β*.

The measurement area size and/or the number of measurements may be adaptable, facilitating to change a width of the measurement region and the distance between measurements selected at the measurement areas and thus amount and frequency of the measurements in the output 2D scanner data.

The set of measurement areas may comprise measurements from a set of channels of the scanner, such as a LIDAR scanner. The measurement areas may be defined to extend in the horizontal direction based on some or all of the available channels of the scanner 40. The measurement range and angle of the scanner may be adaptable.

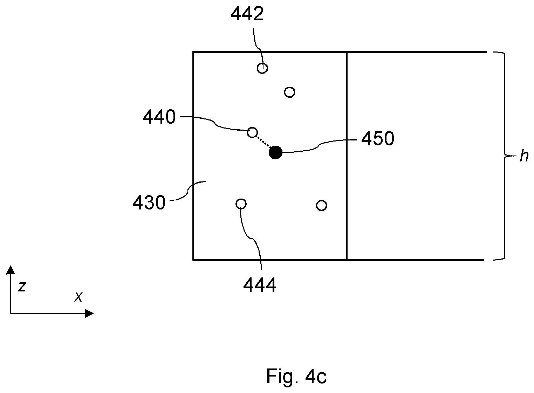

Fig. 4c further illustrates an example of selecting 240 a measurement point 420 in a measurement area 430 in the set of measurement areas. The apparatus may be configured to detect a plurality of measurements 440, 442, 444 in the scanner data from the 3D scanner inside the measurement area or bin 430, due to the form of the 3D scanning. The apparatus may be configured determine distance of each detected measurement point to a measurement area center 450. In this example point 440 has the shortest distance and is selected in block 240 for the measurement area 430.

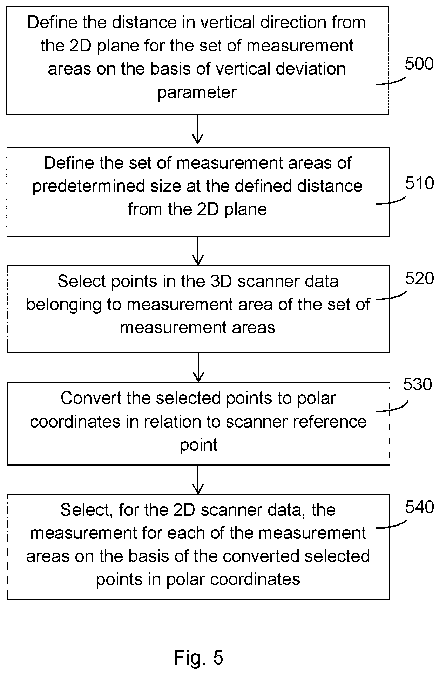

Fig. 5 illustrates a further example method, for defining and applying the measurement areas. The method may be performed by the apparatus performing the method of Fig. 2. The method comprises:
- defining 500 the distance in vertical direction from the 2D plane for the set of measurement areas on the basis of a vertical deviation parameter,
- defining 510 the set of measurement areas of a predetermined size at the defined distance from the 2D plane,
- selecting 520 points in the 3D scanner data belonging to a measurement area of the set of measurement areas,
- converting 530 the selected points to polar coordinates in relation to a scanner reference point, and
- selecting, 540 for the 2D scanner data, the measurement for each of the measurement areas on the basis of the converted selected points in polar coordinates.

Block 530 may thus comprise converting *x* and *y* coordinates in Cartesian coordinate system into polar coordinates defining the measurement distances of the selected points, from the scanner coordinate frame. The polar coordinates may be defined in relation to the scanner reference point. The polar coordinates may thus define the angle of the point from initial bearing in the vertical direction from the scanner reference point, and the distance of the point from the scanner reference point.

The information of orientation of the scanner in block 210 and 220 may comprise a transformation matrix or be based on a transformation matrix. The transformation matrix may specify the orientation of the scanner in relation to a vehicle coordinate system. The orientation may be defined by a rotation matrix defining angles between a vehicle reference point at the horizontal plane and the scanner for each coordinate axels.

The apparatus may be configured to adjust vertical or z-axis coordinate term of the input matrix to select the vertical level of the 2D plane 300b. As illustrated above, this level may indicate the *z* direction differentiation and level from which the set of measurement areas and associated 2D measurement points may be selected (or from which the set of measurement areas may be further deviated). If the term is zero, the 2D plane may be set at the scanner origo.

The transformation matrix may refer generally to a transformation or conversion function to convert position information between two different worksite models or maps. The worksite model may refer to an environment model or map representing the worksite, such as a 2D or a 3D tunnel model. It is to be noted that the worksite model does not have to be a complete representation of the environment, but may be a 2D model or a partial 3D model, such as a floor model. A further example of a specific worksite model is a drivability model or map, which may be a 2D or 3D environment model comprising further augmented drivability data. For example, some floor points of a floor model may comprise drivability data. For example, drivability data may comprise vehicle specific drivability data, may indicate one or more points or portions of the model traversable/drivable by the mining vehicle, and/or comprise vehicle control parameters, such as speed.

The 2D scanner data may be transmitted or otherwise provided in block 250 for another unit or function, to position the mining vehicle or another mining vehicle on the basis of 2D reference data. For example, the apparatus may be configured to send the position in block 250 to a positioning or navigation unit or function tracking position of the mining vehicle based on the 2D worksite model. The positioning or navigation unit/function may be part of the mining vehicle 10. For example, the positioning or navigation function may be performed by the control unit 20 or another control unit, or in another device outside the mining vehicle. The mining vehicle may be an autonomously driving vehicle, and the 2D scanner data may be provided to define the position of the vehicle to control and/or monitor the mining vehicle during autonomous driving.

The apparatus adapted to perform at least some of the above features may be configured to determine the position of the vehicle after block 250 on the basis of the 2D data. The position may be determined based on matching at least a portion of a 2D profile of the 2D scanner data to a 2D reference profile indicated by a worksite model (representing the 2D reference data).

In another example embodiment, the apparatus is further configured to generate or update 2D worksite model data based on the 2D scanner data. The apparatus may be configured to and transmit the 2D worksite model data to another vehicle and/or control device of the worksite, such as a device of the control system 6.

The apparatus configured to perform the method, or another apparatus, may be configured to provide the position defined based on the 2D scanner data to indicate the position of the vehicle in a mining automation monitoring system and/or graphical user interface (GUI) view. The apparatus may be configured to, in addition to or instead of the mining vehicle position monitoring, provide the position for at least one of route planning, mining vehicle driving or mining task control, collision prevention, obstacle detection, and/or steering control for the mining vehicle operating autonomously. The position of the mining vehicle may be defined and applied after block 250 for such operations for the mining vehicle and/or other mining vehicles at the worksite. For example, on-line route planning or collision avoidance function (applying the second worksite model) of the control system 6 or the vehicle 10 may receive and use continuously updated position information of the vehicle 10.

It is to be appreciated that various further features may be complement or differentiate at least some of the above-illustrated embodiments. For example, there may be further user interaction and/or automation functionality to monitor and control vehicles and above-illustrated operations and/or settings thereof.

An electronic device comprising electronic circuitries may be an apparatus for realizing and configured to at least some embodiments illustrated above, such as the method illustrated in connection with Fig. 2. The apparatus may be comprised in at least one computing device connected to or integrated into a control system/unit of the mining vehicle 10, or a control device of the control system 6, for example. In case of a control system of a mining vehicle, such a control system may be an intelligent on-board control system controlling operation of various sub-systems of the vehicle, such as a hydraulic system, a motor, etc. Such control systems are often distributed and include many independent modules connected by a bus system of controller area network (CAN) nodes, for example.

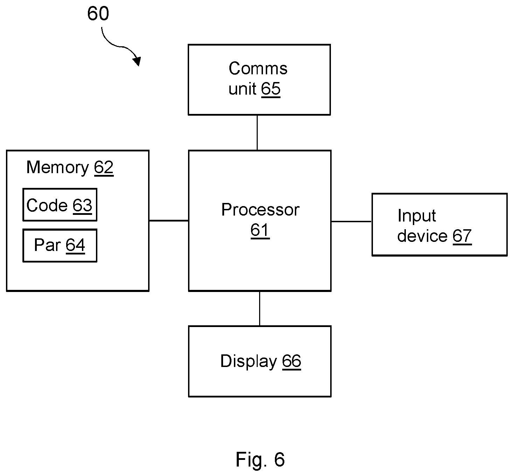

Fig. 6 illustrates a simplified example apparatus capable of supporting at least some embodiments of the present invention. Illustrated is a device 60, which may be configured to carry out at least some of the above-illustrated embodiments relating to mapping data processing. In some embodiments, the device 60 comprises or implements, for example, the control unit 20, or other module(s), functions and/or unit(s) for performing at least some of the above-illustrated embodiments. The device may be configured to perform the method of Fig. 2 and embodiments thereof.

Comprised in the device 60 is a processor 61, which may comprise, for example, a single- or multi-core processor. The processor 61 may comprise more than one processor. The processor may comprise at least one application-specific integrated circuit, ASIC. The processor may comprise at least one field-programmable gate array, FPGA. The processor may be configured, at least in part by computer instructions, to perform actions.

The device 60 may comprise memory 62. The memory may comprise random-access memory and/or permanent memory. The memory may be at least in part accessible to the processor 61. The memory may be at least in part comprised in the processor 61. The memory may be at least in part external to the device 60 but accessible to the device. The memory 62 may be means for storing information, such as parameters 64 affecting operations of the device. The parameter information in particular may comprise parameter information affecting adapting the scanner data processing related features, such as threshold and/or deviation values.

The memory 62 may be a non-transitory computer readable medium comprising computer program code 63 including computer instructions that the processor 61 is configured to execute. When computer instructions configured to cause the processor to perform certain actions are stored in the memory, and the device in overall is configured to run under the direction of the processor using computer instructions from the memory, the processor and/or its at least one processing core may be considered to be configured to perform said certain actions. The processor may, together with the memory and computer program code, form means for performing at least some of the above-illustrated features in the device, such as the method of Fig. 2 or embodiments thereof.

The device 60 may comprise a communications unit 65 comprising a transmitter and/or a receiver. The transmitter and the receiver may be configured to transmit and receive, respectively, for example, data and control commands within or outside the vehicle. The transmitter and/or receiver may be configured to operate in accordance with long term evolution, LTE, 3GPP new radio access technology (N-RAT), wireless local area network, WLAN, a non-terrestrial communication standard, and/or Ethernet standards, for example. The device 60 may comprise a near-field communication, NFC, transceiver. The NFC transceiver may support at least one NFC technology, such as NFC, Bluetooth, or similar technologies.

The device 60 may comprise or be connected to a UI. The UI may comprise at least one of a display 66, a speaker, an input device 67 such as a keyboard, a joystick, a touchscreen, and/or a microphone. The UI may be configured to display views on the basis of above illustrated embodiments. A user may operate the device and control at least some of above illustrated features. In some embodiments, the user may control the vehicle 10 via the UI, for example, to manually drive the vehicle, operate a boom, change driving mode, change display views, modify parameters 64, etc.

The device 60 may further comprise and/or be connected to further units, devices and systems, such as one or more sensor devices 68, such as the scanner(s) or other sensor devices sensing environment of the device 60 or properties or mobility of the vehicle, such as wheel rotation or orientation changes.

The processor 61, the memory 62, the communications unit 65 and the UI may be interconnected by electrical leads internal to the device 60 in a multitude of different ways. For example, each of the aforementioned devices may be separately connected to a master bus internal to the device, to allow for the devices to exchange information. However, as the skilled person will appreciate, this is only one example and depending on the embodiment various ways of interconnecting at least two of the aforementioned devices may be selected without departing from the scope of the present invention.

The apparatus, such as the device 60, the mining vehicle 10, the control unit 20, or a device of the control system 6, may be configured at least to: receive three-dimensional, 3D, scanner data generated by a scanner of a mining vehicle operating at a worksite, receive information of orientation of the scanner in relation to a horizontal plane of the mining vehicle, define a two-dimensional, 2D, plane aligned with the horizontal plane of the mining vehicle on the basis of the information of the orientation, define a set of measurement areas having a distance in a vertical direction from the 2D plane, select, for each of the measurement areas, a measurement on the basis of the 3D scanner data and within a measurement area of the set, and provide 2D scanner data comprising the selected measurements to position the mining vehicle or another mining vehicle on the basis of 2D reference data.

The apparatus may be, or may be included, in the mining vehicle. The mining vehicle may be configured to: drive autonomously at the worksite on the basis of a position defined based on the 2D scanner data and/or generate or update 2D worksite model data based on the 2D scanner data and transmit the 2D worksite model data to another vehicle or control device of the worksite. The worksite is an underground worksite, and the 3D scanner data comprises point cloud data indicative of a tunnel wall profile.

The apparatus may be configured to determine the position of the vehicle on the basis of matching at least a portion of a 2D profile of the 2D scanner data to a 2D reference profile indicated by a worksite model.

The set of measurement areas comprises measurements from a set of channels of the scanner. The apparatus may be configured to define the measurement areas in a horizontal direction on the basis of horizontal direction parameter information, which is indicative of size of the measurement areas in the horizontal direction and a number of measurement areas required.

The apparatus may be configured to define a size of the measurement areas in the vertical direction based on a vertical size parameter.

The apparatus may be configured to, in order to deviate the set of measurement areas in the vertical direction from a reference point of the scanner, position the set of measurement areas at a predefined distance in the vertical direction from the 2D plane, or position the 2D plane at a predefined distance in the vertical direction from the reference point of the scanner before defining the set of measurement areas.

The apparatus may be configured to:
- define the distance in a vertical direction from the 2D plane for the set of measurement areas on the basis of a vertical deviation parameter
- define the set of measurement areas of a predetermined size at the defined distance from the 2D plane,
- select points in the 3D scanner data belonging to a measurement area of the set of measurement areas,
- convert the selected points to polar coordinates in relation to a reference point of the scanner, and
- select, for the 2D scanner data, the measurement for each of the measurement areas on the basis of the converted selected points in polar coordinates.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", that is, a singular form, throughout this document does not exclude a plurality.

## Claims

1. A scanner emulation apparatus (60), comprising at least one processor (61) and at least one memory (62) including computer program code (63), the at least one memory (62) and the computer program code (63) configured to, with the at least one processor, cause the apparatus (60) at least to:
- receive three-dimensional, 3D, scanner data generated by a scanner (40) of a mining vehicle (10) operating at a worksite,
- receive information of orientation (300a) of the scanner (40) in relation to a horizontal plane (310) of the mining vehicle (10), **characterised in that** the apparatus is further caused at least to:
- define a two-dimensional, 2D, plane (300b, 330) at a vertical direction level in relation to a vertical direction level of the scanner (40) and a reference point (320) thereof, the 2D plane (300b, 330) being aligned parallel with the horizontal plane (310) of the mining vehicle (10) on the basis of the information of the orientation (300a) of the scanner (40),
- define a set (340) of measurement areas (430) having a distance in a vertical direction from the 2D plane (300b, 330),
- select a measurement (410) within each measurement area (430) of the set (340) on the basis of the 3D scanner data thereby excluding vertical position information of the 3D scanner data, and
- provide emulated 2D scanner data comprising the selected measurements to position, on the basis of 2D reference data and the emulated 2D scanner data, the mining vehicle (10) or another mining vehicle.

2. The apparatus of claim 1, wherein the at least one memory (62) and the computer program code (63) are configured to, with the at least one processor (61), cause the apparatus (60) to determine the position of the vehicle (10) on the basis of matching at least a portion of a 2D profile of the 2D scanner data to a 2D reference profile indicated by a worksite model.

3. The apparatus of any preceding claim, wherein the at least one memory (62) and the computer program code (63) are configured to, with the at least one processor (61), cause the apparatus (60) to receive the information of orientation (300a) of the scanner (40) on the basis of a transformation matrix specifying the orientation (300a) of the scanner (40) in relation to a vehicle coordinate system.

4. The apparatus of any preceding claim, wherein the set (340) of measurement areas (430) comprises measurements from a set of channels of the scanner (40) and the at least one memory (62) and the computer program code (63) are configured to, with the at least one processor (61), cause the apparatus (60) to define the measurement areas (430) in a horizontal direction on the basis of horizontal direction parameter information, which is indicative of size of the measurement areas (430) in the horizontal direction and a number of measurement areas (430) required.

5. The apparatus of any preceding claim, wherein the at least one memory (62) and the computer program code (63) are configured to, with the at least one processor (61), cause the apparatus (60) to define a size of the measurement areas (430) in the vertical direction based on a vertical size parameter.

6. The apparatus of any preceding claim, wherein the at least one memory (62) and the computer program code (63) are configured to, with the at least one processor (61), cause the apparatus (60) to, in order to deviate the set (340) of measurement areas (430) in the vertical direction from a reference point (320) of the scanner (40), position the set (340) of measurement areas (430) at a predefined distance (d2) in the vertical direction from the 2D plane (300b, 330), or
position the 2D plane (300b, 330) at a predefined distance (d1) in the vertical direction from the reference point (320) of the scanner (40) before defining the set (340) of measurement areas (430).

7. The apparatus of any preceding claim, wherein the at least one memory (62) and the computer program code (63) are configured to, with the at least one processor (61), cause the apparatus (60) to
- define the distance in a vertical direction from the 2D plane (300b, 330) for the set (340) of measurement areas (430) on the basis of a vertical deviation parameter,
- define the set (340) of measurement areas (430) of a predetermined size at the defined distance from the 2D plane (300b, 330),
- select points in the 3D scanner data belonging to a measurement area (430) of the set (340) of measurement areas (430),
- convert the selected points to polar coordinates in relation to a reference point (320) of the scanner (40), and
- select, for the 2D scanner data, the measurement for each of the measurement areas (430) on the basis of the converted selected points in polar coordinates.

8. The apparatus of any preceding claim, wherein the worksite is an underground worksite, and the 3D scanner data comprises point cloud data indicative of a tunnel wall profile.

9. The apparatus of any preceding claim, wherein the apparatus is or is included in the mining vehicle (10) configured to:
- drive autonomously at the worksite on the basis of a position defined based on the 2D scanner data and/or
- generate or update 2D worksite model data based on the 2D scanner data and transmit the 2D worksite model data to another vehicle or control device of the worksite.

10. A method for adapting scanner data by a mining vehicle (10), the method comprising:
- receiving (200) three-dimensional, 3D, scanner data generated by a scanner (40) of a mining vehicle (10) operating at a worksite,
- receiving (210) information of orientation (300a) of the scanner (40) in relation to a horizontal plane (310) of the mining vehicle (10), **characterised by**
- defining (220) a two-dimensional, 2D, plane at a vertical direction level in relation to a vertical direction level of the scanner (40) and a reference point (320) thereof, the 2D plane (300b, 330) being aligned parallel with the horizontal plane (310) of the mining vehicle (10) on the basis of the information of the orientation (300a) of the scanner (40),
- defining (230) a set (340) of measurement areas (430) having a distance in a vertical direction from the 2D plane (300b, 330),
- selecting (240) a measurement within each measurement area (430) of the set (340) on the basis of the 3D scanner data within each measurement area (430) of the set (340) thereby excluding vertical position information of the 3D scanner data, and
- providing (250) emulated 2D scanner data comprising the selected measurements to position, on the basis of 2D reference data and the emulated 2D scanner data, the mining vehicle (10) or another mining vehicle.

11. The method of claim 10, comprising determining the position of the vehicle on the basis of matching at least a portion of a 2D profile of the 2D scanner data to a 2D reference profile indicated by a worksite model.

12. The method of claim 10 or 11, comprising receiving the information of orientation (300a) of the scanner (40) on the basis of a transformation matrix specifying the orientation (300a) of the scanner (40) in relation to a vehicle coordinate system.

13. The method of any preceding claim, comprising positioning, in order to deviate the set (340) of measurement areas (430) in the vertical direction from a reference point (320) of the scanner (40), the set (340) of measurement areas (430) at a predefined distance (d2) in the vertical direction from the 2D plane (300b, 330), or positioning the 2D plane (300b, 330) at a predefined distance (d1) in the vertical direction from the reference point (320) of the scanner (40) before defining the set (340) of measurement areas (430).

14. The method of any preceding claim, comprising:
- define (500) the distance in a vertical direction from the 2D plane (300b, 330) for the set (340) of measurement areas (430) on the basis of a vertical deviation parameter,
- define (510) the set (340) of measurement areas (430) of a predetermined size at the defined distance from the 2D plane (300b, 330),
- select (520) points in the 3D scanner data belonging to a measurement area (430) of the set (340) of measurement areas (430),
- convert (530) the selected points to polar coordinates in relation to a reference point (320) of the scanner (40), and
- select (540), for the 2D scanner data, the measurement for each of the measurement areas (430) on the basis of the converted selected points in polar coordinates.

15. A computer program (63) comprising code for, when executed in a data processing apparatus (61), to cause the apparatus (60) for performing the method of any one of claims 10 to 14.

## Patentansprüche

1. Scanner-Emulationseinrichtung (60), umfassend mindestens einen Prozessor (61) und mindestens einen Speicher (62), der Computerprogrammcode (63) beinhaltet, wobei der mindestens eine Speicher (62) und der Computerprogrammcode (63) konfiguriert sind, um mit dem mindestens einen Prozessor die Einrichtung (60) mindestens zu Folgendem zu veranlassen:
- Empfangen von dreidimensionalen, 3D-, Scannerdaten, die von einem Scanner (40) eines Bergbaufahrzeugs (10) erzeugt werden, das auf einer Baustelle arbeitet,
- Empfangen von Informationen zur Ausrichtung (300a) des Scanners (40) in Bezug auf eine horizontale Ebene (310) des Bergbaufahrzeugs (10),
**dadurch gekennzeichnet, dass** die Einrichtung weiter mindestens zu Folgendem veranlasst wird:
- Definieren einer zweidimensionalen, 2D-, Ebene (300b, 330) auf einem vertikalen Richtungsniveau in Bezug auf ein vertikales Richtungsniveau des Scanners (40) und eines Referenzpunktes (320) davon, wobei die 2D-Ebene (300b, 330) parallel mit der horizontalen Ebene (310) des Bergbaufahrzeugs (10) auf der Grundlage der Informationen über die Ausrichtung (300a) des Scanners (40) ausgerichtet ist,
- Definieren eines Satzes (340) von Messbereichen (430), die einen Abstand in einer vertikalen Richtung von der 2D-Ebene (300b, 330) aufweisen,
- Auswählen einer Messung (410) innerhalb jedes Messbereichs (430) des Satzes (340) auf der Grundlage der 3D-Scannerdaten, wodurch vertikale Positionsinformationen der 3D-Scannerdaten ausgeschlossen werden, und
- Bereitstellen emulierter 2D-Scannerdaten, die die ausgewählten Messungen umfassen, um das Bergbaufahrzeug (10) oder ein anderes Bergbaufahrzeug auf der Grundlage von 2D-Referenzdaten und der emulierten 2D-Scannerdaten zu positionieren.

2. Einrichtung nach Anspruch 1, wobei der mindestens eine Speicher (62) und der Computerprogrammcode (63) konfiguriert sind, um mit dem mindestens einen Prozessor (61) die Einrichtung (60) zu veranlassen, die Position des Fahrzeugs (10) auf der Grundlage des Abgleichens mindestens eines Abschnitts eines 2D-Profils der 2D-Scannerdaten mit einem 2D-Referenzprofil zu bestimmen, das durch ein Baustellenmodell angezeigt wird.

3. Einrichtung nach einem vorstehenden Anspruch, wobei der mindestens eine Speicher (62) und der Computerprogrammcode (63) konfiguriert sind, um mit dem mindestens einen Prozessor (61) die Einrichtung (60) zu veranlassen, die Informationen zur Ausrichtung (300a) des Scanners (40) auf der Grundlage einer Transformationsmatrix zu empfangen, die die Ausrichtung (300a) des Scanners (40) in Bezug auf ein Fahrzeugkoordinatensystem angibt.

4. Einrichtung nach einem vorstehenden Anspruch, wobei der Satz (340) von Messbereichen (430) Messungen aus einem Satz von Kanälen des Scanners (40) umfasst und der mindestens eine Speicher (62) und der Computerprogrammcode (63) konfiguriert sind, um mit dem mindestens einen Prozessor (61) die Einrichtung (60) zu veranlassen, die Messbereiche (430) in einer horizontalen Richtung auf der Grundlage von Parameterinformationen über die horizontale Richtung zu definieren, die die Größe der Messbereiche (430) in der horizontalen Richtung und eine erforderliche Anzahl von Messbereichen (430) anzeigen.

5. Einrichtung nach einem vorstehenden Anspruch, wobei der mindestens eine Speicher (62) und der Computerprogrammcode (63) konfiguriert sind, um mit dem mindestens einen Prozessor (61) die Einrichtung (60) zu veranlassen, eine Größe der Messbereiche (430) in der vertikalen Richtung auf der Grundlage eines vertikalen Größenparameters zu definieren.

6. Einrichtung nach einem vorstehenden Anspruch, wobei der mindestens eine Speicher (62) und der Computerprogrammcode (63) konfiguriert sind, um mit dem mindestens einen Prozessor (61) die Einrichtung (60) zu veranlassen, um den Satz (340) von Messbereichen (430) in der vertikalen Richtung von einem Referenzpunkt (320) des Scanners (40) abzuweichen, den Satz (340) von Messbereichen (430) in einem vordefinierten Abstand (d2) in der vertikalen Richtung von der 2D-Ebene (300b, 330) zu positionieren, oder
die 2D-Ebene (300b, 330) in einem vordefinierten Abstand (d1) in der vertikalen Richtung von dem Referenzpunkt (320) des Scanners (40) zu positionieren, bevor der Satz (340) von Messbereichen (430) definiert wird.

7. Einrichtung nach einem vorstehenden Anspruch, wobei der mindestens eine Speicher (62) und der Computerprogrammcode (63) konfiguriert sind, um mit dem mindestens einen Prozessor (61) die Einrichtung (60) zu Folgendem zu veranlassen:
- Definieren des Abstands in einer vertikalen Richtung von der 2D-Ebene (300b, 330) für den Satz (340) von Messbereichen (430) auf der Grundlage eines vertikalen Abweichungsparameters,
- Definieren des Satzes (340) von Messbereichen (430) einer vorbestimmten Größe in dem definierten Abstand von der 2D-Ebene (300b, 330),
- Auswählen von Punkten in den 3D-Scannerdaten, die zu einem Messbereich (430) des Satzes (340) von Messbereichen (430) gehören,
- Umwandeln der ausgewählten Punkte in Polarkoordinaten in Bezug auf einen Referenzpunkt (320) des Scanners (40), und
- Auswählen, für die 2D-Scannerdaten, der Messung für jeden der Messbereiche (430) auf der Grundlage der umgewandelten ausgewählten Punkte in Polarkoordinaten.

8. Einrichtung nach einem vorstehenden Anspruch, wobei die Baustelle eine Untertagebaustelle ist und die 3D-Scannerdaten Punktwolkendaten umfassen, die ein Tunnelwandprofil anzeigen.

9. Einrichtung nach einem vorstehenden Anspruch, wobei die Einrichtung in das Bergbaufahrzeug (10) eingeschlossen ist oder darin konfiguriert ist zum:
- autonomen Fahren auf der Baustelle auf der Grundlage einer auf den 2D-Scannerdaten basierenden definierten Position und/oder
- Erzeugen oder Aktualisieren von 2D-Baustellenmodelldaten auf der Grundlage der 2D-Scannerdaten und Senden der 2D-Baustellenmodelldaten an ein anderes Fahrzeug oder eine Steuervorrichtung der Baustelle.

10. Verfahren zum Anpassen von Scannerdaten durch ein Bergbaufahrzeug (10), wobei das Verfahren umfasst:
- Empfangen (200) dreidimensionaler 3D-Scannerdaten, die von einem Scanner (40) eines auf einer Baustelle eingesetzten Bergbaufahrzeugs (10) erzeugt werden,
- Empfangen (210) von Informationen zur Ausrichtung (300a) des Scanners (40) in Bezug auf eine horizontale Ebene (310) des Bergbaufahrzeugs (10), **gekennzeichnet durch**:
- Definieren (220) einer zweidimensionalen, 2D-, Ebene auf einem vertikalen Richtungsniveau in Bezug auf ein vertikales Richtungsniveau des Scanners (40) und eines Referenzpunktes (320) davon, wobei die 2D-Ebene (300b, 330) parallel mit der horizontalen Ebene (310) des Bergbaufahrzeugs (10) auf der Grundlage der Informationen über die Ausrichtung (300a) des Scanners (40) ausgerichtet ist,
- Definieren (230) eines Satzes (340) von Messbereichen (430), die in einer vertikalen Richtung einen Abstand von der 2D-Ebene (300b, 330) aufweisen,
- Auswählen (240) einer Messung innerhalb jedes Messbereichs (430) des Satzes (340) auf der Grundlage der 3D-Scannerdaten innerhalb jedes Messbereichs (430) des Satzes (340), wodurch vertikale Positionsinformationen der 3D-Scannerdaten ausgeschlossen werden, und
- Bereitstellen (250) emulierter 2D-Scannerdaten, die die ausgewählten Messungen umfassen, um das Bergbaufahrzeug (10) oder ein anderes Bergbaufahrzeug auf der Grundlage von 2D-Referenzdaten und den emulierten 2D-Scannerdaten zu positionieren.

11. Verfahren nach Anspruch 10, umfassend das Bestimmen der Position des Fahrzeugs auf der Grundlage des Abgleichens mindestens eines Abschnitts eines 2D-Profils der 2D-Scannerdaten mit einem 2D-Referenzprofil, das durch ein Baustellenmodell angezeigt wird.

12. Verfahren nach Anspruch 10 oder 11, umfassend das Empfangen der Information über die Ausrichtung (300a) des Scanners (40) auf der Grundlage einer Transformationsmatrix, die die Ausrichtung (300a) des Scanners (40) in Bezug auf ein Fahrzeugkoordinatensystem angibt.

13. Verfahren nach einem vorstehenden Anspruch, umfassend die Positionierung, um den Satz (340) von Messbereichen (430) in der vertikalen Richtung von einem Referenzpunkt (320) des Scanners (40) abzuweichen, des Satzes (340) von Messbereichen (430) in einem vordefinierten Abstand (d2) in der vertikalen Richtung von der 2D-Ebene (300b, 330), oder
Positionieren der 2D-Ebene (300b, 330) in einem vordefinierten Abstand (d1) in der vertikalen Richtung von dem Referenzpunkt (320) des Scanners (40), bevor der Satz (340) von Messbereichen (430) definiert wird.

14. Verfahren nach einem vorstehenden Anspruch, umfassend:
- Definieren (500) des Abstands in einer vertikalen Richtung von der 2D-Ebene (300b, 330) für den Satz (340) von Messbereichen (430) auf der Grundlage eines vertikalen Abweichungsparameters,
- Definieren (510) des Satzes (340) von Messbereichen (430) einer vorbestimmten Größe in dem definierten Abstand von der 2D-Ebene (300b, 330),
- Auswählen (520) von Punkten in den 3D-Scannerdaten, die zu einem Messbereich (430) des Satzes (340) von Messbereichen (430) gehören,
- Umwandeln (530) der ausgewählten Punkte in Polarkoordinaten in Bezug auf einen Referenzpunkt (320) des Scanners (40), und
- Auswählen (540), für die 2D-Scannerdaten, der Messung für jeden der Messbereiche (430) auf der Grundlage der umgewandelten ausgewählten Punkte in Polarkoordinaten.

15. Computerprogramm (63), umfassend Code, der, wenn er in einer Datenverarbeitungseinrichtung (61) ausgeführt wird, die Einrichtung (60) veranlasst, das Verfahren nach einem der Ansprüche 10 bis 14 auszuführen.

## Revendications

1. Appareil d'émulation de scanner (60), comprenant au moins un processeur (61) et au moins une mémoire (62) incluant un code de programme informatique (63), la au moins une mémoire (62) et le code de programme informatique (63) étant configurés pour, avec le au moins un processeur, amener l'appareil (60) au moins à :
- recevoir des données de scanner tridimensionnelles, 3D, générées par un scanner (40) d'un véhicule minier (10) opérant au niveau d'un chantier,
- recevoir des informations d'orientation (300a) du scanner (40) par rapport à un plan horizontal (310) du véhicule minier (10),
**caractérisé en ce que** l'appareil est en outre amené au moins à :
- définir un plan bidimensionnel, 2D (300b, 330) à un niveau de direction verticale par rapport à un niveau de direction verticale du scanner (40) et un point de référence (320) de celui-ci, le plan 2D (300b, 330) étant aligné parallèlement au plan horizontal (310) du véhicule minier (10) sur la base des informations de l'orientation (300a) du scanner (40),
- définir un ensemble (340) de zones de mesure (430) présentant une distance dans une direction verticale à partir du plan 2D (300b, 330),
- sélectionner une mesure (410) dans chaque zone de mesure (430) de l'ensemble (340) sur la base des données de scanner 3D, excluant ainsi des informations de position verticale des données de scanner 3D, et
- fournir des données de scanner 2D émulées comprenant les mesures sélectionnées pour positionner, sur la base de données de référence 2D et des données de scanner 2D émulées, le véhicule minier (10) ou un autre véhicule minier.

2. Appareil selon la revendication 1, dans lequel la au moins une mémoire (62) et le code de programme informatique (63) sont configurés pour, avec le au moins un processeur (61), amener l'appareil (60) à déterminer la position du véhicule (10) sur la base d'une correspondance d'au moins une partie d'un profil 2D des données de scanner 2D avec un profil de référence 2D indiqué par un modèle de chantier.

3. Appareil selon une quelconque revendication précédente, dans lequel la au moins une mémoire (62) et le code de programme informatique (63) sont configurés pour, avec le au moins un processeur (61), amener l'appareil (60) à recevoir les informations d'orientation (300a) du scanner (40) sur la base d'une matrice de transformation spécifiant l'orientation (300a) du scanner (40) par rapport à un système de coordonnées de véhicule.

4. Appareil selon une quelconque revendication précédente, dans lequel l'ensemble (340) de zones de mesure (430) comprend des mesures provenant d'un ensemble de canaux du scanner (40) et la au moins une mémoire (62) et le code de programme informatique (63) sont configurés pour, avec le au moins un processeur (61), amener l'appareil (60) à définir les zones de mesure (430) dans une direction horizontale sur la base d'informations de paramètres de direction horizontale, qui indiquent la taille des zones de mesure (430) dans la direction horizontale et un nombre de zones de mesure (430) requises.

5. Appareil selon une quelconque revendication précédente, dans lequel la au moins une mémoire (62) et le code de programme informatique (63) sont configurés pour, avec le au moins un processeur (61), amener l'appareil (60) à définir une taille des zones de mesure (430) dans la direction verticale sur la base d'un paramètre de taille verticale.

6. Appareil selon une quelconque revendication précédente, dans lequel la au moins une mémoire (62) et le code de programme informatique (63) sont configurés pour, avec le au moins un processeur (61), amener l'appareil (60) à, afin de dévier l'ensemble (340) de zones de mesure (430) dans la direction verticale à partir d'un point de référence (320) du scanner (40), positionner l'ensemble (340) de zones de mesure (430) à une distance prédéfinie (d2) dans la direction verticale à partir du plan 2D (300b, 330), ou
positionner le plan 2D (300b, 330) à une distance prédéfinie (d1) dans la direction verticale à partir du point de référence (320) du scanner (40) avant de définir l'ensemble (340) de zones de mesure (430).

7. Appareil selon une quelconque revendication précédente, dans lequel la au moins une mémoire (62) et le code de programme informatique (63) sont configurés pour, avec le au moins un processeur (61), amener l'appareil (60) à
- définir la distance dans une direction verticale à partir du plan 2D (300b, 330) pour l'ensemble (340) de zones de mesure (430) sur la base d'un paramètre de déviation verticale,
- définir l'ensemble (340) de zones de mesure (430) d'une taille prédéterminée à la distance définie à partir du plan 2D (300b, 330),
- sélectionner des points dans les données de scanner 3D appartenant à une zone de mesure (430) de l'ensemble (340) de zones de mesure (430),
- convertir les points sélectionnés en coordonnées polaires par rapport à un point de référence (320) du scanner (40), et
- sélectionner, pour les données de scanner 2D, la mesure pour chacune des zones de mesure (430) sur la base des points sélectionnés convertis en coordonnées polaires.

8. Appareil selon une quelconque revendication précédente, dans lequel le chantier est un chantier souterrain, et les données de scanner 3D comprennent des données de nuage de points indiquant un profil de paroi de tunnel.

9. Appareil selon une quelconque revendication précédente, dans lequel l'appareil est ou est inclus dans le véhicule minier (10) configuré pour :
- conduire de manière autonome au niveau du chantier sur la base d'une position définie sur la base des données de scanner 2D et/ou
- générer ou mettre à jour des données de modèle de chantier 2D sur la base des données de scanner 2D et transmettre les données de modèle de chantier 2D à un autre véhicule ou dispositif de commande du chantier.

10. Procédé d'adaptation de données de scanner par un véhicule minier (10), le procédé comprenant :
- la réception (200) de données de scanner tridimensionnelles, 3D, générées par un scanner (40) d'un véhicule minier (10) opérant au niveau d'un chantier,
- la réception (210) d'informations d'orientation (300a) du scanner (40) par rapport à un plan horizontal (310) du véhicule minier (10), **caractérisé par**
- la définition (220) d'un plan bidimensionnel, 2D, à un niveau de direction verticale par rapport à un niveau de direction verticale du scanner (40) et un point de référence (320) de celui-ci, le plan 2D (300b, 330) étant aligné parallèlement au plan horizontal (310) du véhicule minier (10) sur la base des informations de l'orientation (300a) du scanner (40),
- la définition (230) d'un ensemble (340) de zones de mesure (430) présentant une distance dans une direction verticale à partir du plan 2D (300b, 330),
- la sélection (240) d'une mesure dans chaque zone de mesure (430) de l'ensemble (340) sur la base des données de scanner 3D dans chaque zone de mesure (430) de l'ensemble (340), excluant ainsi des informations de position verticale des données de scanner 3D, et
- la fourniture (250) de données de scanner 2D émulées comprenant les mesures sélectionnées pour positionner, sur la base de données de référence 2D et des données de scanner 2D émulées, le véhicule minier (10) ou un autre véhicule minier.

11. Procédé selon la revendication 10, comprenant la détermination de la position du véhicule sur la base d'une correspondance d'au moins une partie d'un profil 2D des données de scanner 2D avec un profil de référence 2D indiqué par un modèle de chantier.

12. Procédé selon la revendication 10 ou 11, comprenant la réception des informations d'orientation (300a) du scanner (40) sur la base d'une matrice de transformation spécifiant l'orientation (300a) du scanner (40) par rapport à un système de coordonnées de véhicule.

13. Procédé selon une quelconque revendication précédente, comprenant le positionnement, afin de dévier l'ensemble (340) de zones de mesure (430) dans la direction verticale à partir d'un point de référence (320) du scanner (40), de l'ensemble (340) de zones de mesure (430) à une distance prédéfinie (d2) dans la direction verticale à partir du plan 2D (300b, 330), ou
le positionnement du plan 2D (300b, 330) à une distance prédéfinie (d1) dans la direction verticale à partir du point de référence (320) du scanner (40) avant de définir l'ensemble (340) de zones de mesure (430).

14. Procédé selon une quelconque revendication précédente, comprenant :
- la définition (500) de la distance dans une direction verticale à partir du plan 2D (300b, 330) pour l'ensemble (340) de zones de mesure (430) sur la base d'un paramètre de déviation verticale,
- la définition (510) de l'ensemble (340) de zones de mesure (430) d'une taille prédéterminée à la distance définie à partir du plan 2D (300b, 330),
- la sélection (520) de points dans les données de scanner 3D appartenant à une zone de mesure (430) de l'ensemble (340) de zones de mesure (430),
- la conversion (530) des points sélectionnés en coordonnées polaires par rapport à un point de référence (320) du scanner (40), et
- la sélection (540), pour les données de scanner 2D, de la mesure pour chacune des zones de mesure (430) sur la base des points sélectionnés convertis en coordonnées polaires.

15. Programme informatique (63) comprenant un code pour, lorsqu'il est exécuté dans un appareil de traitement de données (61), amener l'appareil (60) à réaliser le procédé selon l'une quelconque des revendications 10 à 14.
